# EUROPÄISCHE PATENTSCHRIFT

(11) **EP 3 356 572 B1**
(45) Veröffentlichungstag und Bekanntmachung des Hinweises auf die Patenterteilung: **11.03.2020**
(21) Anmeldenummer: 15777649.3
(22) Anmeldetag: 30.09.2015
(51) Int. Cl.: C23C 2/02, C23C 2/06, C23C 2/28, C23C 2/40, B32B 15/01, B32B 15/18, C21D 1/26, C21D 6/00, C21D 9/46, C22C 18/04, C22C 38/00, C22C 38/02, C22C 38/04, C22C 38/06, C22C 38/14, G01N 19/04, G01N 15/08

(54) **VERFAHREN ZUR HERSTELLUNG EINES STAHLFLACHPRODUKTS MIT EINER ZN-GALVANNEALING-SCHUTZBESCHICHTUNG**
METHOD FOR THE PRODUCTION OF A FLAT STEEL PRODUCT HAVING A ZN-GALVANNEALED PROTECTIVE COATING
PROCÉDÉ DE PRODUCTION EN PRODUIT PLAT EN ACIER POURVU D'UN REVÊTEMENT DE PROTECTION RECUIT APRÈS GALVANISATION

(43) Veröffentlichungstag der Anmeldung: 08.08.2018
(73) Patentinhaber: ThyssenKrupp Steel Europe AG, 47166 Duisburg (DE)
(72) Erfinder: MACHALITZA, Karsten, 45473 Mülheim (DE); MACHEREY, Friedhelm, 46519 Alpen (DE); URAN, Klaus, 47447 Moers (DE); YANIK, Robert, 47506 Neukirchen-Vluyn (DE); RECKZEH, Michael, 45131 Essen (DE)
(74) Vertreter: Cohausz & Florack
(86) Internationale Anmeldenummer: PCT/EP2015/072634
(87) Internationale Veröffentlichungsnummer: WO 2017/054870

(56) Entgegenhaltungen:
- WO-A1-01/88216
- IZUTANI S ET AL: "New Welding Process, "J-SolutionTM Zn", Suitable for Galvanized Steel in the Automotive Industry", KOBELCO TECHNOLOGY REVIEW, Nr. 32, Dezember 2013 (2013-12), Seiten 16-23, XP055286490, Kobe Steel Ltd., Kobe [JP] ISSN: 0913-4794
- MOSKAL G: "The porosity assessment of thermal barrier coatings obtained by APS method Manufacturing and processing", JOURNAL OF ACHIEVEMENTS IN MATERIALS AND MANUFACTURING ENGINEERING, Bd. 20, Nr. 1-2, Januar 2007 (2007-01), Seiten 483-486, XP055286494, International OCSCO World Press, Gliwice [PL] ISSN: 1734-8412
- CARLESS S P ET AL: "Influence of substrate topography on formation of iron zinc phases and properties of galvanneal coatings", PROCEEDINGS OF THE 4TH INTERNATIONAL CONFERENCE ON ZINC AND ZINC ALLOY COATED STEEL SHEET (GALVATECH'98), SEPTEMBER 20 - 23, 1998, MAKUHARI, CHIBA [JP], 1998, pages 208-214, XP055609612, The Iron and Steel Institute of Japan, Tokyo [JP] DOI: 10.1179/030192300677390
- O'DELL S P ET AL: "The formation of craters within the galvanneal coating and their effects on processing properties", MECHANICAL WORKING AND STEEL PROCESSING CONFERENCE, 44TH INTERNATIONAL ROLLING CONFERENCE: 8TH INTERNATIONAL SYMPOSIUM ON ZINC-COATED STEELS, SEPTEMBER 8 - 11, 2002 ORLANDO, FL [US], vol. XL, 2002, pages 1299-1307, XP055609630, Iron & Steel Society, Warrendale, PA [US] ISBN: 978-1-886362-62-8

## Beschreibung

Die Erfindung betrifft ein Verfahren zum Beurteilen der Porigkeit einer auf einem Stahlflachprodukt durch Schmelztauchbeschichten aufgetragenen Zn-Beschichtung.

Wenn hier von Stahlflachprodukten die Rede ist, dann sind damit Walzprodukte in Form von Blech, Band, daraus gewonnene Zuschnitte oder Platinen gemeint.

Sofern hier Legierungsangaben gemacht werden, beziehen sich diese immer auf das Gewicht, sofern nicht ausdrücklich etwas anderes angegeben ist. Angaben zur Zusammensetzung von Atmosphären und desgleichen beziehen sich dagegen immer auf das Volumen der betrachteten Atmosphäre, sofern nichts anderes angegeben ist.

Stahlflachprodukte der hier in Rede stehenden Art werden für die Herstellung von Karosseriebauteilen für Automobile verwendet. Aus diesem Anwendungszweck ergeben sich nicht nur hohe Anforderungen an die mechanischen Eigenschaften, das Umformverhalten, die Schweißbarkeit und die Lackierbarkeit, sondern es werden auch hohe Ansprüche an die optische Erscheinung der Oberflächen der aus derartigen Stahlflachprodukten geformten Bauteile gestellt.

Um die geforderten Eigenschaftskombinationen anzubieten, sind so genannte IF-Stähle ("IF" = "Interstitial Free") entwickelt worden, die besonders gute Umformeigenschaften besitzen, allerdings anfällig gegen Korrosion in einem aggressiven Umfeld sind, dem sie als Karosseriebauteil im praktischen Einsatz ausgesetzt sind. Bei IF-Stählen handelt es sich um weiche und duktile Stähle, die nur sehr geringe Anteile an interstitiell eingelagerten Legierungselementen, wie Kohlenstoff oder Stickstoff, besitzen. Ihr geringer Kohlenstoffgehalt wird bei der Stahlerzeugung eingestellt. Um den im Stahl noch vorhandenen Kohlenstoff abzubinden, können IF-Stähle als Karbidbildner beispielsweise Titan und Niob enthalten. Durch gezieltes Zulegieren von Mangan, Silizium oder Phosphor kann eine deutlich erhöhte Zugfestigkeit erzielt werden. Die Anwesenheit von Silizium in IF-Stahl beeinflusst die Haftung der Schutzbeschichtung auf dem Stahlsubstrat.

Um einen ausreichenden Schutz gegen Korrosion zu gewährleisten, werden Stahlflachprodukte, die aus IF-Stählen bestehen, mit metallischen Schutzüberzügen versehen, die eine gegenüber dem Umgebungssauerstoff passive Schicht bilden und so das Stahlsubstrat schützen.

Im großtechnischen Umfeld lässt sich die Schutzbeschichtung kostengünstig und effektiv durch so genanntes "Schmelztauchbeschichten" auf das Stahlsubstrat auftragen. Das als Flachprodukt in Form eines Bands oder Blechs angelieferte Stahlsubstrat durchläuft dazu eine Wärmebehandlung, um das Stahlsubstrat so zu konditionieren, dass der anschließend aufgebrachte Schutzüberzug optimal auf ihm haftet.

Das derart vorbereitete Stahlsubstrat wird anschließend im kontinuierlichen Durchlauf dann durch ein Schmelzenbad geleitet. Dessen Zusammensetzung ist so abgestimmt, dass die durch das Schmelztauchbeschichten auf dem Stahlsubstrat gebildete Beschichtung den Verformungen folgen kann, denen das Stahlflachprodukt bei der Herstellung des Bauteils unterzogen wird. Ziel ist es dabei, die Gefahr von Rissbildungen, Abplatzungen und desgleichen zu minimieren.

Um die Schweißeignung und die Anbindung des Schutzüberzugs zu verbessern, können mit einer Zn-Schutzbeschichtung versehene Stahlflachprodukte nach dem Schmelztauchbeschichten einer Wärmebehandlung unterzogen werden, bei der durch Interdiffusion von Zink und Eisen die Zinkauflage durch eine Wärmebehandlung in eine Zink-Eisen-Legierungsschicht, abgekürzt "ZF"-Überzug oder "ZF"-Schutzbeschichtung, umgewandelt wird. Diese Wärmebehandlung wird in der Fachsprache auch als "Galvannealing" und die erhaltenen Stahlflachprodukte als "Galvannealed"-Stahlflachprodukte bezeichnet.

Der Eisengehalt in der Schutzbeschichtung von Galvannealed-Stahlflachprodukten wirkt sich beim Schweißen positiv auf die Elektrodenstandzeit aus. Die raue, kristalline Oberfläche der ZF-Schutzbeschichtung begünstigt zudem die Lackierbarkeit. Allerdings ist die Verformbarkeit von Galvannealed-Stahlflachprodukten eingeschränkt, weil die ZF-Schutzbeschichtung spröde, intermetallische Phasen enthält, die den Ausgangspunkt für Risse und Abplatzungen bilden können.

Besonders problematisch erweist sich die Neigung von Galvannealed-Stahlflachprodukten zur Bildung von Abrieb aufgrund der spröden, im ZF-Überzug vorhandenen intermetallischen Phasen, wenn solche Stahlflachprodukte in einer Presse zu komplex geformten Bauteilen umgeformt werden sollen. Hierbei besteht die Gefahr, dass sich nadelförmige Partikel aus dem ZF-Überzug lösen ("Powdering") oder dass es zum großflächigen Abplatzen von Überzugsplacken kommt ("Flaking"). Die Placken können sich dabei vollständig vom Überzug lösen oder es kommt zu einer kohäsiven Ablösung innerhalb der Schicht.

Es sind verschiedene Versuche bekannt, die Anhaftung von Zn-basierten Schutzüberzügen auf dem jeweiligen Stahlsubstrat zu verbessern. Ein Verfahren, das dies leisten soll, ist aus der JP 11-140587 A bekannt.

Bei dem bekannten Verfahren wird zunächst ein Stahlsubstrat bereitgestellt, das bei den drei in der JP 11-140587 A angegebenen Beispielen (in Gew.-%) C-Gehalte von 0,002 %, 0,003 % und 0,01 %, Mn-Gehalte von 0,1 %, 0,2 % und 1,0 %, Si-Gehalte von 0,03 %, 0,03 % und 0,1 %, Al-Gehalte von 0,03 %, 0,03 % und 0,04 %, P-Gehalte von 0,01 %, 0,05 % und 0,07 %, S-Gehalte von 0,008 %, 0,008 % und 0,003 %, Ti-Gehalte von 0,03 %, 0,04 % und 0,06 %, Nb-Gehalte von 0,003 %, 0,007 % und 0,01 % sowie B-Gehalte von 0,004 %, 0,006 % und 0,010 %, Rest jeweils Eisen und unvermeidbare Verunreinigungen enthält. Das Stahlsubstrat wird unter einer H₂-N₂-Atmosphäre mit 5 Vol % H₂ und einem Taupunkt von höchstens -20 °C bei einer Glühtemperatur von 800 - 850 °C geglüht. Anschließend wird es auf eine Badeintrittstemperatur von 475 °C abgekühlt und dann durch ein Schmelzenbad geleitet, das 0,14 Gew.-% Al und als Rest Zink und unvermeidbare Verunreinigungen enthält. Das aus dem Schmelzenbad austretende, mit der Zn-Schmelztauchbeschichtung versehene Stahlflachprodukt durchläuft nun eine Wärmebehandlung, bei der es zur Ausbildung einer ZF-Legierungsschicht bei einer Temperatur von 480 - 540 °C geglüht wird. Bei einem so erzeugten, mit einer ZF-Schutzbeschichtung versehenen Stahlflachprodukt soll die Haftung der Beschichtung auf dem jeweiligen Stahlsubstrat verbessert sein, so dass Abplatzungen und Risse der Beschichtung vermieden werden.

Aus der Veröffentlichung von IZUTANI S ET AL: "New Welding Process, "J-SolutionTM Zn", Suitable for Galvanized Steel in the Automotive Industry", KOBELCO TECHNOLOGY REVIEW, Nr. 32, Dezember 2013, Seiten 16 - 23, XP055286490, Kobe Steel Ltd., Kobe [JP] ISSN: 0913-4794 ist ein Verfahren bekannt, bei dem Porendefekte in Stahlblechen mit Zn-Galvannealing-Beschichtung röntgenradiographisch untersucht werden.

Vor dem Hintergrund des voranstehend erläuterten Standes der Technik bestand die Aufgabe der Erfindung darin, ein Verfahren anzugeben, dass eine einfache und zuverlässige Beurteilung der Porigkeit der Oberfläche einer Zn-Galvannealingbeschichtung eines Stahlflachprodukts im Hinblick auf das Powderingverhalten der Zn-Galvannealingbeschichtung erlaubt.

Die oben genannte Aufgabe ist erfindungsgemäß durch das in Anspruch 1 angegebene Verfahren gelöst worden.

Ein Stahlflachprodukt umfasst in Übereinstimmung mit dem eingangs erläuterten Stand der Technik ein Stahlsubstrat und eine Schutzbeschichtung, die durch Schmelztauchbeschichten auf das Stahlsubstrat aufgetragen und einer anschließenden Galvannealing-Behandlung unterzogen worden ist. Der Hauptbestandteil des Schutzüberzugs ist Zink. Dabei weist die Schutzbeschichtung an ihrer freien Oberfläche in die Schutzbeschichtung hineinreichende Poren auf.

Es überwiegen die bei einer topographischen Untersuchung ermittelten Anteile von rechtsschiefen Messspuren gegenüber dem Anteil von nicht-rechtsschiefen Messspuren sowohl in Messrichtung als auch quer zur Messrichtung, wobei die rechtsschiefen Messspuren dadurch bestimmt werden, dass von einem quadratischen Oberflächenabschnitt mit einer Kantenlänge von 1 mm für mindestens 400 parallele Messspuren jeweils ein Messwertkollektiv von jeweils mindestens 10.000 Messwerten erfasst wird, für jedes der erfassten Messwertkollektive in Messrichtung und quer zur Messrichtung der Mittelwert und der Median ermittelt werden, der für jede Messspur der zu ihr ermittelte Mittelwert mit dem für sie ermittelten Median verglichen werden und solche Messspuren als rechtsschief eingestuft werden, bei denen der Mittelwert größer ist als der Median.
Überraschend hat sich gezeigt, dass bei einem ausreichend hohen Anteil an Poren an der Gesamtfläche der Überzugsschicht die Neigung zur Staubbildung ("Powdering") durch feine Partikel, die sich aus der nach der Galvannealing-Behandlung auf dem Stahlsubstrat vorhandenen ZF-Schutzbeschichtung des Stahlflachprodukts lösen könnten, und zum Abplatzen größerer Placken von der ZF-Schutzbeschichtung ("Flaking") deutlich vermindert ist. Dementsprechend ist bei einem Stahlflachprodukt die Gefahr der Entstehung von Rissen auch dann gering, wenn ein Stahlflachprodukt in einem Kaltformprozess komplex verformt wird. So kann die Schutzbeschichtung auch Verformungen um engste Radien folgen, ohne nachhaltigen Beschädigungen der Beschichtung ausgesetzt zu sein.

Dies wird dadurch erreicht, dass in der Schutzbeschichtung so viele Poren vorgesehen sind, dass sich bei einer Biegung des Stahlflachprodukts um einen engen Radius das auf der Innenseite der Biegung liegende, zwischen den Poren liegende Material der Schutzbeschichtung den durch die Poren angebotenen freien Raum einnehmen kann, so dass es auf der Innenseite der Biegung nur zu minimierten Druckspannungen aufgrund der dort unvermeidbar eintretenden Materialstauchung kommt. Auf der Außenseite der Biegung kann sich das Material der Schutzbeschichtung dagegen aufgrund der durch die Poren bewirkten Unterbrechungen nach Art eines Fächers aufspreizen, so dass die dort in Folge der Materiallängung unvermeidbar auftretenden Zugspannungen ebenfalls minimiert sind.

In der Praxis zeigt sich im Sinne einer Daumenregel, dass Zn-Galvannealedbeschichtungen, bei denen die Öffnungsflächen der Poren in Summe mindestens 10 % der Fläche der freien Oberfläche der Schutzbeschichtung einnehmen, ein merklich verbessertes Powdering-Verhalten bei der Umformung in einem Umformwerkzeug besitzen.

Mit der oben genannten Maßgabe lassen sich zuverlässig diejenigen mit einer Zn-Galvannealingbeschichtung versehenen Stahlflachprodukte identifizieren, von denen erwartet werden kann, dass sie bei der Verformung nur zu minimaler Pulverbildung neigen.

Erfindungsgemäß wird zur Beurteilung, ob eine für die erfindungsgemäßen Zwecke ausreichend porige Oberfläche vorliegt, eine quadratische Oberfläche mit 1 mm Seitenlänge vermessen. Auf jeder der mehr als 400 dazu vermessenen parallelen Messspuren werden mindestens 10.000 Messwerte erfasst. Die so erhaltenen Profildaten können beispielsweise in Form einer datentechnisch verarbeitbaren Tabelle abgelegt werden, die die Grundlage für die weiteren Auswertungen bildet. Das erfindungsgemäße Beurteilungsverfahren geht nun von der Erkenntnis aus, dass bei einer porigen Oberfläche die Verteilung der Messwerte in einer Spur eine deutliche Rechtsschiefe aufweist, d.h. eine von Werten im negativen Bereich mit einer ins Negative verschobenen Spitze der Verteilung besitzt. Eine nicht ausreichend porige Oberfläche weist hingegen keine signifikante Schiefe auf. Aufgrund dieser Beobachtung wird erfindungsgemäß von der jeweils betrachteten Oberfläche ein Messwertkollektiv von mindestens 10.000 Messwerten für mindestens 400 parallel ausgerichtete Messspuren in einem quadratischen Oberflächenabschnitt des Zn-Überzugs erfasst, wobei der betrachtete Oberfächenabschnitt eine Kantenlänge von 1 mm aufweist.

Dann werden der Mittelwert und der Median der Messwerte eines jeden Messwertkollektivs in Messrichtung und quer zur Messrichtung bestimmt, wobei jeweils nur solche Messspuren als rechtsschief angesehen werden, für die der Mittelwert größer ist als ihr Median.

Anschließend werden die Anteile der rechtsschiefen Messspuren an allen Messspuren in Messrichtung und quer zur Messrichtung bestimmt.

Schließlich werden die Anteile der rechtsschiefen Messspuren in Messrichtung und quer zur Messrichtung jeweils mit einem Grenzwert von mindestens 60 % verglichen, wobei eine Oberfläche der Zn-Beschichtung, bei der die Anteile der rechtsschiefen Messspuren sowohl in Messrichtung als auch quer dazu mindestens dem Grenzwert entsprechen, als porig beurteilt werden, wogegen Proben, bei denen entweder der Anteil der rechtsschiefen Messspuren in Messrichtung oder der Anteil der rechtsschiefen Messspuren quer zur Messrichtung unter dem Grenzwert liegt, als nicht-porig angesehen werden.

Die Erfindung überprüft somit als Kriterium für die Beurteilung, ob eine rechtsschiefe Verteilung vorliegt, ob der Mittelwert der Messwerte einer Messspur größer ist als der Median. Bei einer rechtsschiefen Verteilung gilt wie an sich bekannt "Mittelwert > Median", wogegen bei einer linksschiefen Verteilungen gilt "Mittelwert < Median". Verschärft werden kann dieses Kriterium noch dadurch, dass auch der Modalwert der jeweils betrachteten Messdatenmenge hinzugezogen wird. Dann gilt für eine rechtsschiefe Verteilung, wie ebenfalls an sich bekannt, "Mittelwert > Median > Modalwert", wogegen bei einer linksschiefen Verteilung gilt "Mittelwert < Median < Modalwert" (https://de.wikipedia.org/wiki/Schiefe_(Statistik)).
Mit der erfindungsgemäßen Methode lassen sich porige und nicht-porige Spurenkollektive in beiden Richtungen (Messrichtung und quer dazu) sehr gut unterscheiden. Überwiegt der Anteil der rechtsschiefen Spuren für beide Messrichtungen, liegt er insbesondere bei mindestens 60 %, so kann von einem guten Powderingverhalten ausgegangen werden. Je höher der Anteil an rechtsschiefen Spuren, desto geringer die Entstehung von Pulverabrieb bei der Umformung. Dementsprechend sind insbesondere solche Zn-galvannealed beschichtete Stahlflachprodukte für die erfindungsgemäßen Zwecke geeignet, bei denen der Anteil der rechtsschiefen Messspuren in Messrichtung mindestens 70 % und der Anteil der rechtsschiefen Messspuren quer zur Messrichtung mindestens 80 % beträgt.

Im Ergebnis erhält die Schutzbeschichtung eines Stahlflachprodukts somit durch die vorgesehenen Poren die Fähigkeit, trotz ihrer an sich spröden Konstitution bei einer Verformung nach Art eines schwammartigen Werkstoffs zu reagieren, der bei einer Stauchung durch Verkleinerung seiner Poren ausweichen und bei einer Längung durch Verformung der Poren nachgeben kann.
Grundsätzlich eignet sich die Erfindung für jedes für die Kaltformgebung vorgesehene Stahlflachprodukt, dessen Stahlsubstrat mit einer Galvannealed-Schutzbeschichtung versehen ist. Besonders wirksam erweist sich die Erfindung jedoch bei Stahlflachprodukten, deren Stahlsubstrat aus einem weichen IF-Stahl besteht. Hierbei kommen alle bekannten Stahlzusammensetzungen in Frage, die üblicherweise für die Herstellung von Stahlflachprodukten verwendet werden, welche mit einer Zink-basierten Schutzbeschichtung schmelztauchbeschichtet und anschließend einer Galvannealing-Behandlung unterzogen werden.

Für die Erzeugung des Stahlsubstrats eines Stahlflachprodukts kommen beispielsweise Stähle in Frage, die (in Gew.-%) bis zu 0,05 % C, bis zu 0,2 % Si, 0,5 - 0,18 % Mn, bis zu 0,02 % P, bis zu 0,02 % S, 0,01 - 0,06 % AI, bis zu 0,005 % N, 0,02 - 0,1 % Ti, bis zu 0,0005 % B, Rest Eisen und technisch unvermeidbaren Verunreinigungen besteht.

Eine andere, besonders geeignete, auf die kombinierte Anwesenheit von Ti und Nb gestützte Legierungsvorschrift für die Herstellung des Stahlsubstrats eines Stahlflachprodukts lautet (in Gew.-%): bis zu 0,2 % C, bis zu 0,5 % Si, bis zu 1,5 % Mn, bis zu 0,02 % P, bis zu 0,01 % S, bis zu 0,1 % Al, 0,01 - 0,03 % Nb, bis zu 0,005 % N, 0,02 - 0,08 % Ti, bis zu 0,0007 % B, Rest Eisen und unvermeidbare Verunreinigungen.

Stahlsortenübergreifend schneiden geschlossene Überzüge mit hohem Eisengehalt bei der Haftungsprüfung schlechter ab, als porige Überzüge mit einem niedrigen Eisengehalt. Mit steigendem Siliziumgehalt im IF-Stahl nimmt die adhäsive Flakingneigung ab. Für die Haftung des ZF-Überzuges ist das Vorkommen von oberflächennahem Silizium ausschlaggebend. Ein Si-haltiger IF-Stahl zeigt regelmäßig schon taupunktunabhängig gute Haftungseigenschaften. Bei Si-armem IF-Stahl verbessern sich die Haftungsprüfergebnisse mit sinkendem Taupunkt, da hier Silizium extern angereichert wird. Das gute Flakingverhalten der ZF-Schutzbeschichtung auf einem IF-Substrat mit steigendem Siliziumgehalt wird mit der Ausbildung einer gerichteten und kantigen Substratmikrostruktur, der Verzahnung, in Verbindung gebracht. Werden Stahlsubstrate auf Basis eines IF-Stahls mit geringem Si-Gehalt eingesetzt, wird eine solche typische Verzahnungstruktur nicht erreicht. Daher liegen die Si-Gehalte der Stahlsubstrate der Stahlflachprodukte bevorzugt im oben angegebenen Bereich.

Der Al-Gehalt im Zinkbad hat einen maßgeblichen Einfluss auf die intermetallische Legierungsschichtbildung. Je höher die Konzentration an Aluminium im Zinkbad ist, desto schwächer und langsamer findet die Reaktion von Eisen und Zink statt.

Dies kann für eine Steuerung des Grades genutzt werden, bis zu dem die Durchlegierung der Galvannealed-Schutzbeschichtung mit Eisen innerhalb der für die Wärmebehandlung zur Verfügung stehenden Zeit fortschreitet. Hier kann es vorteilhaft sein, wenn der Al-Gehalt des für die Schmelztauchbeschichtung eingesetzten Schmelzenbads so eingestellt ist, dass die Schutzbeschichtung beim fertigen Stahlflachprodukt (in Gew.-%) bis zu 0,15 Gew.-% Al beträgt, insbesondere im Bereich von 0,1 - 0,15 liegt, wobei zusätzlich bis zu 0,5 Gew.-% Fe im Schmelzenbad vorhanden sein können. Unabhängig davon, welche zusätzlichen Legierungselemente vorhanden sind, besteht der Rest der Schutzbeschichtung stets aus Zn und herstellungsbedingt unvermeidbaren Verunreinigungen.

Typischerweise beträgt bei einem Stahlflachprodukt die Dicke der Schutzbeschichtung bis zu 10 µm, insbesondere 6,5 - 10 µm.

Die in der Oberfläche der Schutzbeschichtung vorhandenen Poren können in beliebiger Verteilung vorliegen.

Indem die von den Öffnungsquerschnitten der Poren eingenommene Fläche an der Oberfläche der Schutzbeschichtung eines Stahlflachprodukts einen Anteil von mindestens 10 % hat, kann sichergestellt werden, dass zwischen dem die Poren stegartig gegeneinander abgrenzenden Material der Schutzbeschichtung jeweils ausreichend Raum zur Verfügung steht, um bei einer Materialstauchung überschüssiges Material der Schutzbeschichtung aufzunehmen.

Das Verfahren ermöglicht es, betriebssicher Stahlflachprodukte im großtechnischen Maßstab zu erzeugen.

Dazu sind beim Verfahren zum Herstellen eines Stahlflachprodukts, das ein als Flachprodukt vorgefertigtes Stahlsubstrat und eine darauf aufgetragene Schutzschicht umfasst, deren Hauptbestandteil Zn ist, folgende Arbeitsschritte vorgesehen:
- Bereitstellen des Stahlsubstrats,
- rekristallisierendes Glühen des Stahlsubstrats bei einer Glühtemperatur von 800 - 850 °C unter einer N₂- und H₂-haltigen Glühatmosphäre, deren Taupunkt nicht höher als -40 °C bis -20 °C ist,
- Abkühlen des rekristallisierend geglühten Stahlsubstrats auf eine Badeintrittstemperatur von 440 - 480 °C,
- Schmelztauchbeschichten des Stahlsubstrats mit dem Schutzüberzug, indem das abgekühlte Stahlsubstrat durch ein Schmelzenbad, das aus Zn oder einer Zn-Legierung besteht, geleitet wird,
- Wärmebehandeln des nach dem Schmelztauchbeschichten erhaltenen Stahlflachprodukts bei einer Glühtemperatur von 500 - 570 °C, um eine Galvannealing-Schutzbeschichtung zu erzeugen,
   und
- Abkühlen des nach dem Schmelztauchbeschichten erhaltenen Stahlflachprodukts auf Raumtemperatur.
Besondere Bedeutung bei der Erzeugung eines Schutzüberzugs mit ausgebildeten Poren kommt der Glühatmosphäre zu, unter der das zur Vorbereitung der Schmelztauchbeschichtung durchgeführte rekristallisierende Glühen absolviert wird. Der eingestellte Taupunkt in der Glühgasatmosphäre beim rekristalliserenden Glühen beeinflusst das Oxidationsverhalten der Legierungselemente. So kommt es bei einem niedrigen Sauerstoffpartialdruck bei einem Taupunkt von höchstens -20 °C, insbesondere höchstens -40 °C, verstärkt zu einer externen Anreicherung der diffusionsfähigen Legierungselemente. Hierdurch wird die angestrebte Porenbildung in der Schutzbeschichtung begünstigt, da sich auf reaktionsträgen Kornflächen vermehrt Poren ausbilden.

IF-Stähle mit geringem Si-Gehalt weisen hier die höchste Oxidbelegung der Korngrenzen der ersten Kornlage bei einem niedrigen Taupunkt von bis zu -40 °C auf. Im Gegensatz dazu führt ein höherer Taupunkt von -5 °C und mehr zu einer internen Elementanreicherung, so dass die sichtbaren Korngrenzen und Kornflächen der ersten Kornlage mit wenigen Oxiden belegt sind.

Eine Texturuntersuchung zeigt, dass das Rekristallisationsverhalten von Siarmen IF-Stählen ebenfalls durch die Taupunkteinstellung gesteuert wird. Die Korngröße nimmt mit steigendem Taupunkt leicht ab, wogegen die Häufigkeit der rekristallisierten Körner mit steigendem Taupunkt zunimmt.

Die Art der Konditionierung des oberflächennahen Gefüges des Stahlsubstrats eines Stahlflachprodukts durch die Einstellung eines vordefinierten Taupunkts wirkt sich direkt auf das Legierungsverhalten des Zinküberzuges aus. Nach dem Verzinken setzt sich der Überzug zum größten Teil aus Reinzink und einem Anteil an intermetallischen Eisen-Zink- Phasen zusammen. Der Anteil dieser Phasen nimmt mit steigendem Taupunkt zu, was auf die interne Oxidation der Legierungselemente zurückzuführen ist, die zu einer hohen Reaktivität der Oberfläche führt.

Bei Stählen mit hohem Siliziumgehalt findet die Legierungsschichtreaktion im Vergleich zum niedriger legierten Stahl verzögert statt.

Die Badeintrittstemperatur, mit der das Stahlsubstrat in das Schmelzenbad einläuft, wird typischerweise so eingestellt, dass es durch das einlaufende Stahlsubstrat zu keiner Abkühlung des Schmelzenbads kommt. Hierzu bieten sich in der Praxis übliche Badeintrittstemperaturen von 450 - 470 °C an.

Nachfolgend werden Ausführungsbeispiele näher erläutert. Es zeigen:
- Fig. 1: ein Diagramm, in dem der prozentuale Flächenanteil der Porenöffnungen über dem Ergebnis eines Klebestreifenbiegetests aufgetragen ist;
- Fig. 2: einen Ausschnitt einer gebogenen Probe eines Stahlflachprodukts in einer schematischen Darstellung;
- Fig. 3: den Ausschnitt der Probe gemäß Fig. 2 bei ebener Ausrichtung des Stahlflachprodukts in schematischer Darstellung;
- Fig. 4: einen Ausschnitt eines Querschliffs einer Probe;
- Fig. 5: einen Ausschnitt eines Querschliffs einer weiteren Probe;
- Fig. 6: eine Prinzipdarstellung des Klebestreifentests, auf Grundlage dessen die im Diagramm gemäß Fig. 1 angegebenen Powdering-Werte ermittelt worden sind;
- Fig. 7: eine Abbildung einer Richtreihe zur Beurteilung des Powderingverhaltens von im Klebestreifentest untersuchten Proben;
- Fig. 8: ein Diagramm mit einer typischen Spur einer nicht-porigen Probe;
- Fig. 9: ein Diagramm mit einer typischen Spur einer porigen Probe;
- Fig. 10: Histogramm der v-Werte für eine nicht-porige Probe;
- Fig. 11: Histogramm der v-Werte für eine porige Probe.

Als Bleche vorliegende Proben P1, P2, P3, P4 von Stahlsubstraten mit den in Tabelle 1 angegebenen Zusammensetzungen sind in einem kontinuierlichen Verfahrensablauf zunächst unter den in Tabelle 2 angegebenen Bedingungen unter einer N₂-H₂-Glühatmosphäre mit einem Taupunkt TP einer rekristallisierenden Glühung bei einer Glühtemperatur T_rg über eine Dauer t_rg unterzogen worden.

Anschließend sind die Proben P1 - P4 auf eine Badeintrittstemperatur Te abgekühlt worden, mit der sie zum Schmelztauchbeschichten in ein auf einer Badtemperatur Tb gehaltenes Schmelzenbad geleitet worden sind, das jeweils einen bestimmten Al-Gehalt aufwies und als Rest aus Zn und unvermeidbaren Verunreinigungen bestand.

Die aus dem Schmelzenbad austretenden Proben P1 - P4 sind schließlich einer Galvannealing-Behandlung unterzogen worden, bei der sie über eine Dauer t_G bei einer Temperatur T_G gehalten worden sind, um auf dem Stahlsubstrat der jeweiligen Stahlflachprodukt-Probe P1 - P4 eine Galvannealing-Schutzbeschichtung zu erzeugen.

Nach dem Abkühlen auf Raumtemperatur sind die Proben hinsichtlich der Ausprägung ihres Schutzüberzugs beurteilt worden. Die Ergebnisse dieser Beurteilung sind in den Tabellen 3a - 3d zusammengefasst.

Anschließend sind die Proben P1 - P4 einem Klebestreifenbiegetest unterzogen worden. Im Einzelnen ist dieser Test in der von der ThyssenKrupp Steel Europe AG herausgegebenen Veröffentlichung "Überzugsbeurteilung von in Linie erzeugtem ZF-Feinblech.", Werkstoffkompetenzzentrum, ABW, 2006, Bde. A-ME-5451-A, beschrieben.

Der Klebestreifenbiegetest ist ein Prüfverfahren zur Ermittlung des PowderingVerhaltens. Dieses Prüfverfahren simuliert eine mechanische Beanspruchung des Werkstoffes durch eine Druck-Biege-Beanspruchung, die für Pressteile während des Umformprozesses üblich ist.

Die Biegevorrichtung besteht aus einem Rollenpaar und einem Biegedorn, um eine Dreipunktbiegung im Rollengesenk vorzunehmen. Der Abstand der beiden Rollen entsprach bei der Untersuchung der Proben P1 - P4 der dreifachen der Prüfblechdicke.

Die Probenoberseite wurde mit einem konventionellen, unter der Handelsbezeichnung "TESA - Film 4104" erhältlichen Klebestreifen versehen.

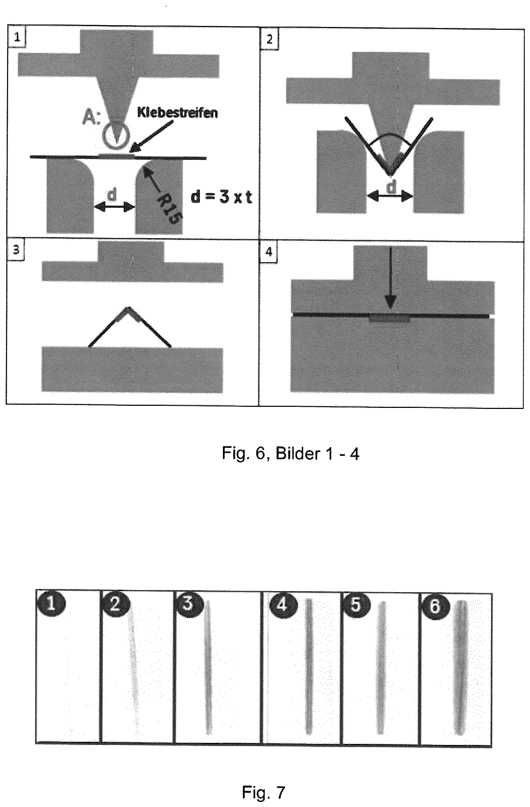

Die Proben P1 - P4 wurden mit der Prüfseite nach oben zeigend in die Vorrichtung eingelegt (Fig. 6, Bild 1) und von oben mit dem Biegedorn um 90° gebogen (Fig. 6, Bild 2). Anschließend folgte das Zurückbiegen der Proben mit Hilfe eines Flachstempels (Fig. 6, Bilder 3 - 4).

Der Klebestreifen wurde abgezogen und zur Bewertung auf ein weißes Blatt Papier geklebt. Am Klebestreifen haften die durch die Umformbeanspruchung aus der Überzugsschicht herausgebrochenen Partikel. Diese erscheinen auf dem weißen Blatt matt grau bis schwarz.

Die Bewertung des Abriebs erfolgt visuell ohne die Verwendung von Hilfsmitteln anhand einer Richtreihe, die sich in 6 Stufen einteilt (Fig. 7). Stufe 1 weist die geringste Partikelablösung auf, hier ist kaum Abrieb erkennbar, das Powdering-Verhalten also optimal. Bis zur Stufe 6 steigt die Menge an Abrieb in gleichen Stufen an, so dass bei der Stufe 6 der meiste Abrieb und damit das schlechtestes Powdering-Verhalten vorliegt.

Proben, deren Powdering-Verhalten den Stufen 1 oder 2 zugeordnet werden können, sind für den Einsatz in der Automobilindustrie geeignet.

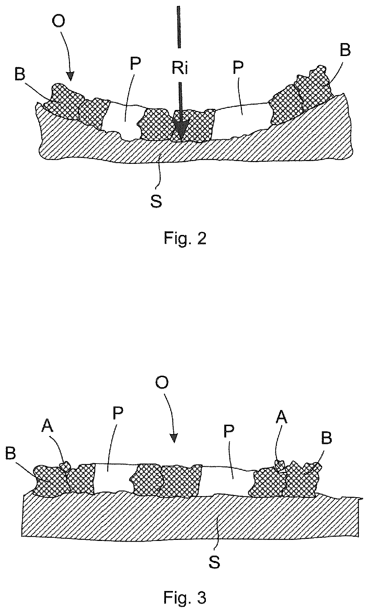

Fig. 2 und 3 verdeutlichen die Wirkung der Poren P, die in der Oberfläche O eines mit einer Zn-Schutzbeschichtung B auf seinem Stahlsubstrat S versehenen Stahlflachprodukts vorhanden sind. Indem sich das die Poren P umgebende Material der Schutzbeschichtung B auf der Innenseite einer um einen Biegeradius Ri erfolgenden Biegung in die durch die Poren P gebildeten Freiräume neigen kann, entstehen in der Schutzbeschichtung deutlich weniger Druckspannungen als bei einer geschlossenen porenfreien Schutzbeschichtung. Dementsprechend brechen deutlich weniger Pulverpartikel A aus der Schutzbeschichtung B, wenn die Probe wieder in ihren ebenen Ausgangszustand zurückgebogen wird (Fig. 3).

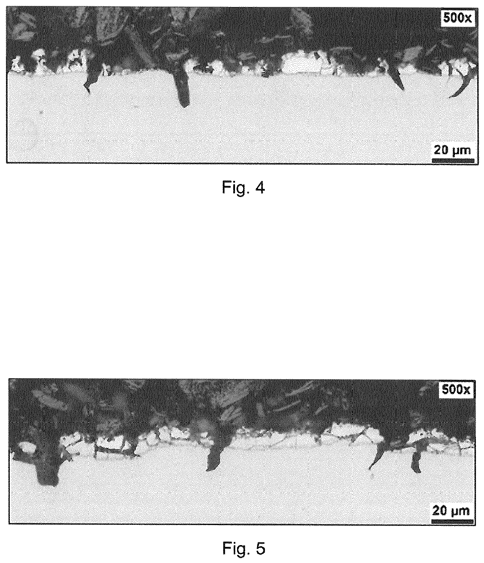

In Fig. 4 ist ein Ausschnitt eines Querschliffs der Probe P2 nach dem Klebestreifenbiegetest gezeigt.

Zum Vergleich ist in Fig. 5 ein Ausschnitt eines Querschliffs einer ebenfalls auf Basis der Probe P2 erzeugten, jedoch unter einer Glühatmosphäre, deren Taupunkt bei -5 °C lag, rekristallisierend geglühten Probe V nach dem Klebebiegetest wiedergegeben.

Es zeigt sich, dass bei der Probe (Fig. 4) relativ wenige Bruchstellen vorhanden sind, wogegen bei der nicht erfindungsgemäßen Probe vermehrt Bruchstellen auftreten.

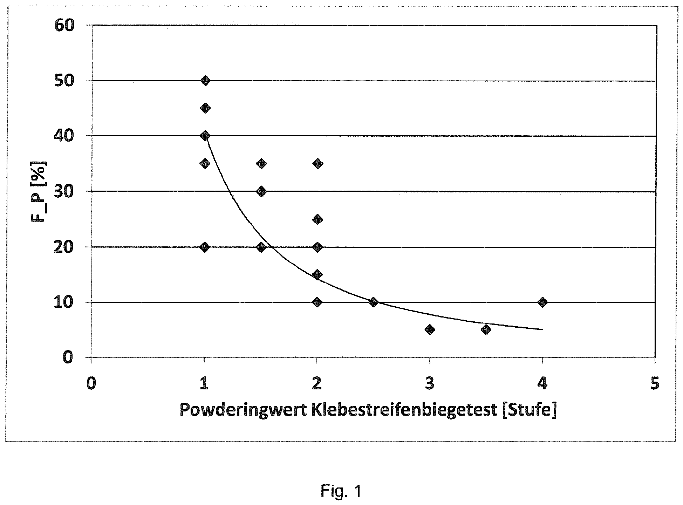

Für die Proben P1 - P4 ist der Anteil der Poren an der jeweils betrachteten Gesamtfläche erfasst und in Fig. 1 über die jeweils zugeordneten Ergebnisse der Klebestreifenbiegetest aufgetragen worden. Es zeigt sich, dass bei ausreichend großen, den oben genannten Vorgaben entsprechenden Flächenanteilen F_P der Poren, die das Powdering-Verhalten der Proben P1 - P4 jeweils die Stufe 1 und 2 erreichen, die für Automobilanwendungen ausreichend sind.

Diag. 1 belegt, dass sich ab einem Anteil F_P der Flächen der Porenöffnungen von 10 % eine deutliche Verringerung des Powderingwertes einstellt.

Zur Beurteilung der Porigkeit sind beispielsweise in den Versuchen 1 und 2 aus den Proben P1 gewonnene Versuchsproben P1',P1" topografisch untersucht worden. Dazu wurden eine quadratische Oberfläche mit 1 mm Seitenlänge des mit einer Zn-Galvannealingbeschichtung beschichteten Stahlflachprodukts vermessen. Auf jeder der 401 vermessenen parallelen Spuren wurden 10.000 Messwerte erfasst. Die so erhaltenen Profildaten wurden in Form einer mit Standardprogrammen datentechnisch verarbeitbaren Tabelle zur Verfügung gestellt.

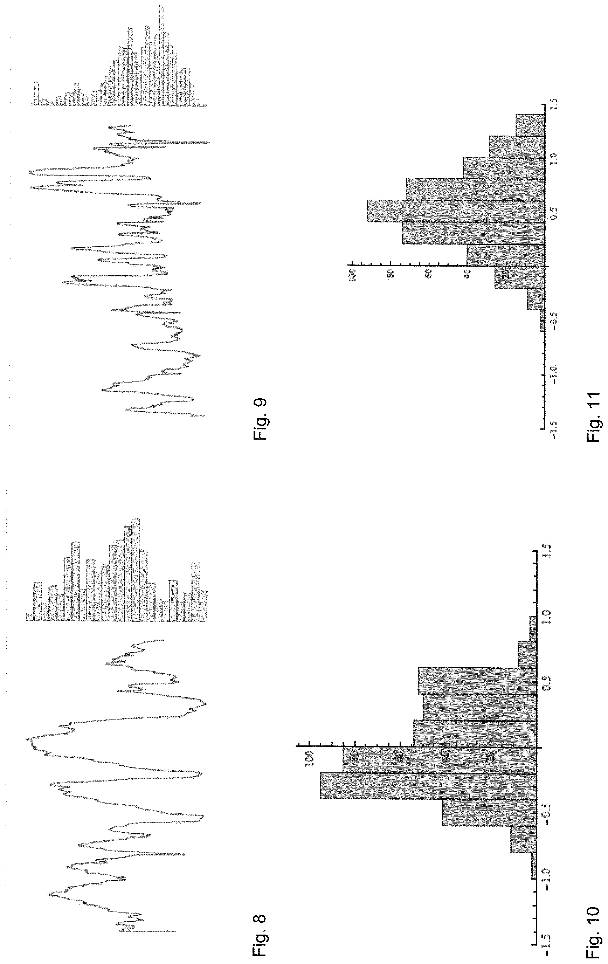

Die erste optische Betrachtung der Spuren zeigte, dass es deutlich sichtbare Unterschiede zwischen den Profilen der porigen und der nicht-porigen Probe gibt. Während die nicht-porige Probe 1" ein annähernd symmetrisches Profilbild mit vergleichbaren Höhen und Tiefen zeigt (Fig. 8), sind bei fast allen Spuren der porigen Probe P' (Fig. 9) breite, jedoch zerklüftete Täler zu erkennen, während die Spitzen vergleichsweise schmal und deutlich voneinander abgegrenzt sind. Rechts neben den Profillinien ist in den Figuren 8 und 9 das zugehörige Histogramm des entsprechenden Profils abgebildet. Es ist erkennbar, dass die Verteilung der Messwerte in einer Spur der porigen Probe eine deutliche Rechtsschiefe aufweist (Häufung von Werten im negativen Bereich, Spitze der Verteilung ist ins Negative verschoben). Die nicht-porige Probe hingegen weist keine signifikante Schiefe auf.

Anschließend sind zur Beschreibung der schiefen Verteilungen Mittelwert, Median und Modalwert der für die Messspurgen erfassten Werte verglichen worden.

Hierzu sind für die hier betrachteten Messwertkollektive (Messwertkollektive der Probe P1' in Messrichtung und quer dazu, Messwertkollektive der Probe P1" in Messrichtung und quer dazu) je Messspur der Mittelwert, der Median und der Modalwert bestimmt worden. Es zeigte sich, dass bei der porigen Probe erwartungsgemäß in Messrichtug und quer dazu jeweils eine deutliche Häufung von rechtsschiefen Verteilungen auftritt, während dies bei der nicht-porigen Probe nur in der um 90° zur ursprünglichen Messung gedrehten Lage der Fall war. In Tabelle 4 sind die Ergebnisse der Messungen zusammengefasst.

Mit dieser Methode lassen sich die porigen und die nicht-porigen Spurenkollektive in beiden Richtungen gut unterscheiden. Außerdem ist bei dieser Betrachtung auch die porige Probe in Messrichtung signifikanter als die nicht-porige Probe quer zur Messrichtung.

Alternativ kann die obige Anforderung abgeschwächt werden, indem der Modalwert außer Betracht genommen und nur noch die Konstellation "Mittelwert > Median" für die Bewertung der Probe zugrunde gelegt wird. Bei identischer Aufteilung der Kollektive wie oben ergeben sich dann die aus Tabelle 5 ablesbaren Resultate.

Insgesamt sind bei dem alternativen Weg die ermittelten Prozentwerte allesamt höher, was auch klar ist, da lediglich eine Randbedingung fallengelassen wurde. Ansonsten ändert sich an den Verhältnissen der Prozentwerte nicht viel. Deutlicher Unterschied zur vorangehenden Betrachtung mit Modalwert ist jedoch, dass alle 10.000 "Spuren" in 90°-Lage die Bedingung "Mittelwert > Median" erfüllen. Insgesamt ist erkennbar, dass nur die porige Probe in beiden Prüfrichtungen eine deutliche Rechtsschiefe über alle Spuren aufweist, während dies bei der nicht-porigen Probe nur quer zur Messrichtung der Fall ist.

**Tabelle 1**

| **Probe** | **C** | **Si** | **Mn** | **P** | **S** | **Al** | **N** | **Ti** | **B** |
|---|---|---|---|---|---|---|---|---|---|
| P1 | 0,0017 | 0,003 | 0,1 | 0,008 | 0,005 | 0,026 | 0,0022 | 0,07 | 0,0002 |
| P2 | 0,0016 | 0,023 | 0,12 | 0,008 | 0,006 | 0,029 | 0,0021 | 0,046 | 0,0002 |
| P3 | 0,0026 | 0,072 | 0,12 | 0,007 | 0,006 | 0,026 | 0,0029 | 0,073 | 0,0002 |
| P4 | 0,174 | 0,418 | 1,49 | 0,017 | 0,002 | 0,041 | 0,0047 | 0,017 | 0,0005 |

| | | | | | | | | | |
|---|---|---|---|---|---|---|---|---|---|
| Angaben in Gew.-%, Rest Eisen und unvermeidbare Verunreinigung | | | | | | | | | |

**Tabelle 2**

| **Versuch** | **Probe** | **TP [°C]** | **T_rg [°C]** | **t_rg [s]** | **Te [°C]** | **Tb [°C]** | **Al-Gehalt [Gew.-%]** | **T_G [°C]** | **t_G [s]** |
|---|---|---|---|---|---|---|---|---|---|
| 1 | P1 | -40 | 795 | 114 | 474 | 470 | 0,100 | 450 | 13 |
| 2 | P1 | -5 | 795 | 114 | 474 | 470 | 0,100 | 450 | 13 |
| 3 | P1 | -40 | 795 | 114 | 474 | 470 | 0,140 | 450 | 13 |
| 4 | P1 | -5 | 795 | 114 | 474 | 470 | 0,140 | 450 | 13 |
| 5 | P2 | -40 | 795 | 114 | 474 | 470 | 0,100 | 450 | 13 |
| 6 | P2 | -5 | 795 | 114 | 474 | 470 | 0,100 | 450 | 13 |
| 7 | P2 | -40 | 795 | 114 | 474 | 470 | 0,140 | 450 | 13 |
| 8 | P2 | -5 | 795 | 114 | 474 | 470 | 0,140 | 450 | 13 |
| 9 | P3 | -40 | 795 | 114 | 474 | 470 | 0,100 | 450 | 13 |
| 10 | P3 | -5 | 795 | 114 | 474 | 470 | 0,100 | 450 | 13 |
| 11 | P3 | -40 | 795 | 114 | 474 | 470 | 0,140 | 450 | 13 |
| 12 | P3 | -5 | 795 | 114 | 474 | 470 | 0,140 | 450 | 13 |
| 13 | P4 | -5 | 795 | 114 | 474 | 470 | 0,100 | 450 | 13 |
| 14 | P4 | -20 | 795 | 114 | 474 | 470 | 0,100 | 450 | 13 |
| 15 | P4 | -40 | 795 | 114 | 474 | 470 | 0,100 | 450 | 13 |

**Tabelle 3a**

| **Versuch** | **Probe** | **Querschliff ZF-Uberzug** | **Bewertung Ergebnis** |
|---|---|---|---|
| 1 | P1 | 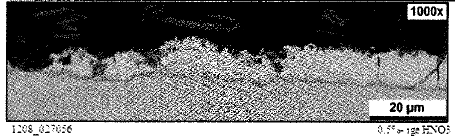 | Bei einem hohen Taupunkt bildet sich eine dickere Gammaphase aus als bei einem niedrigen TP. |
| | | | Stärkere Zerklüftung bei TP -40 °C als bei TP - 5. |
| | | | Der niedrigere Taupunkt (TP = -40 °C) führt zu stärkerer Porenbildung. |
| 2 | P1 | 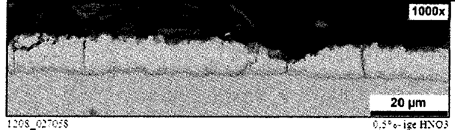 | |
| 3 | P1 | 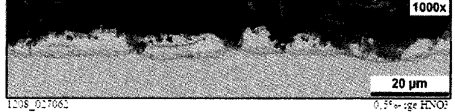 | Bei einem hohen Taupunkt bildet sich eine dickere Gammaphase aus als bei einem niedrigen TP. |
| | | | Stärkere Zerklüftung bei TP -40 °C als bei TP - 5. |
| | | | Der niedrigere Taupunkt (TP = -40°C) führt zu stärkerer Porenbildung. |
| 4 | P1 | 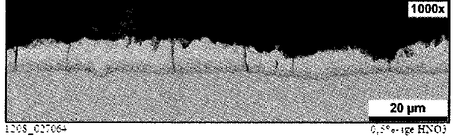 | |
| | | | Der höhere Al-Gehalt des Schmelzenbads begünstigt die Porenbildung bei TP = -40°C. |

**Tabelle 3b**

| **Versuch** | **Probe** | **Querschliff ZF-Uberzug** | **Bewertung Ergebnis** |
|---|---|---|---|
| 5 | P2 | 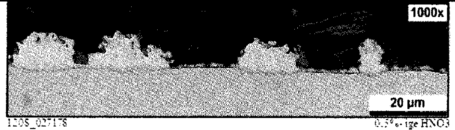 P2 | Gammaphasendicke nimmt mit abnehmendem TP zu. Starke Zerklüftung bei allen Varianten. |
| | | | Der Überzug ist bei TP = -5°C stärker geschlossen als bei TP = -40°C. |
| 6 | P2 | 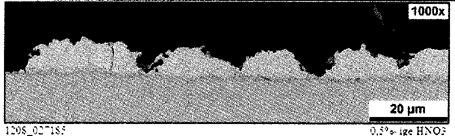 | |
| 7 | P2 | 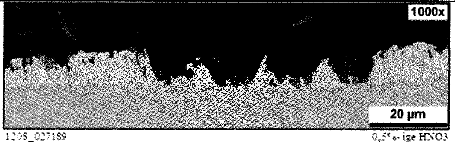 | Gammaphasendicke nimmt mit abnehmendem TP zu. Starke Zerklüftung bei allen Varianten. |
| | | | Der Überzug ist bei TP = -5°C stärker geschlossen als bei TP = -40°C. |
| | | | Der höhere Al-Gehalt des Schmelzenbads begünstigt die Porenbildung bei TP = -40°C. |
| 8 | P2 | 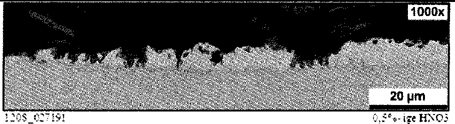 | |

**Tabelle 3c**

| **Versuch** | **Probe** | **Querschliff ZF-Uberzug** | **Bewertung Ergebnis** |
|---|---|---|---|
| 9 | P3 | 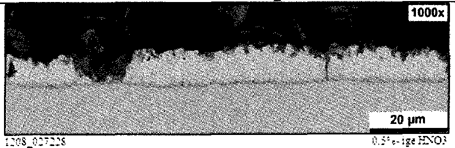 | Gammaphasendicke nimmt mit abnehmendem Taupunkt zu. |
| | | | Es sind bei TP-40 °C vermehrt Zetakristalle auf der Beschichtung zu erkennen. |
| 10 | P3 | 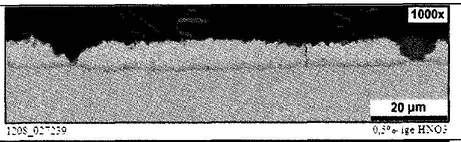 | |
| 11 | P3 | 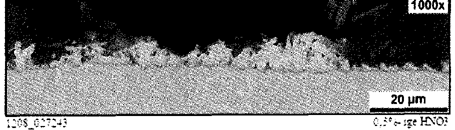 | Der hohe Bad-Alu-Gehalt wirkt sich auf die Schichtbildung besonders bei TP = -40°C aus: starke Zerklüftung und dünne Gammaphase, Zetakristalle |
| 12 | P3 | 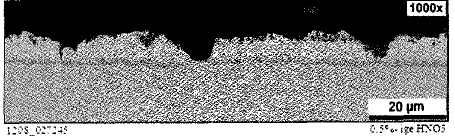 | |

**Tabelle 3d**

| **Versuch** | **Probe** | **Querschliff ZF-Uberzug** | **Bewertung Ergebnis** |
|---|---|---|---|
| 13 | P4 | 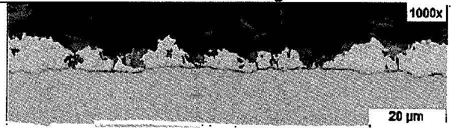 | Starke Zerklüftung |
| 14 | P4 | 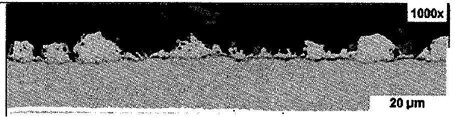 | Starke Zerklüftung, dunkle Färbung einiger Korngrenzen der ersten Lage |
| 15 | P4 | 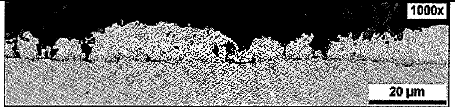 | Starke Zerklüftung, aber geschlossenere Oberfläche |

**Tabelle 4**

| **Probe** | **Spuren in** | **Anzahl der rechtsschiefen Spuren** | **Anzahl der nicht-rechtsschiefen Spuren** | **Anteil der rechtsschiefen Spuren an der Summe der Spuren** | **Erfindungsgemäß?** |
|---|---|---|---|---|---|
| P1' | Messrichtung | 120 | 281 | 30% | NEIN |
| P1' | Quer zur Messrichtung | 6476 | 3524 | 65% | |
| P1" | Messrichtung | 298 | 103 | 74% | JA |
| P1" | Quer zur Messrichtung | 8720 | 1280 | 87% | |

**Tabelle 5**

| **Probe** | **Spuren in** | **Anzahl der rechtsschiefen Spuren** | **Anzahl der nicht-rechtsschiefen Spuren** | **Anteil der rechtsschiefen Spuren an der Summe der Spuren** | **Erfindungsgemäß?** |
|---|---|---|---|---|---|
| P1' | Messrichtung | 145 | 256 | 36% | NEIN |
| P1' | Quer zur Messrichtung | 8299 | 1701 | 83% | |
| P1" | Messrichtung | 356 | 45 | 89% | JA |
| P1" | Quer zur Messrichtung | 10000 | 0 | 100% | |

## Patentansprüche

1. Verfahren zum Beurteilen der Porigkeit der Oberfläche von einem mit einer Zn-Galvannealingbeschichtung beschichteten Stahlflachprodukt umfassend folgende Arbeitsschritte:
- Erfassen jeweils eines Messwertkollektivs von mindestens 10.000 Messwerten für mindestens 400 parallel ausgerichtete Messspuren in einem quadratischen Oberflächenabschnitt des Zn-Überzugs, wobei der betrachtete Oberfächenabschnitt eine Kantenlänge von 1 mm aufweist;
- Bestimmen des Mittelwerts und des Medians der Messwerte eines jeden Messwertkollektivs in Messrichtung, wobei nur solche Messspuren als rechtsschief angesehen werden, für die der Mittelwert größer ist als ihr Median;
- Bestimmen des Mittelwerts und des Medians der Messwerte eines jeden Messwertkollektivs quer zur Messrichtung, wobei nur solche Messspuren quer zur Messrichtung als rechtsschief angesehen werden, für die der Mittelwert größer ist als ihr Median;
- Ermitteln des Anteils der rechtsschiefen Messspuren an allen Messspuren in Messrichtung;
- Ermitteln des Anteils der rechtsschiefen Messpuren an allen Messspuren quer zur Messrichtung;
- Vergleichen des Anteils der rechtsschiefen Messspuren in Messrichtung und des Anteils der rechtsschiefen Messspuren quer zur Messrichtung mit einem Grenzwert von mindestens 60 %, wobei eine Oberfläche der Zn-Beschichtung, bei der die Anteile der rechtsschiefen Messspuren sowohl in Messrichtung als auch quer dazu mindestens dem Grenzwert entsprechen, als porig beurteilt werden, wogegen Proben, bei denen entweder der Anteil der rechtsschiefen Messspuren in Messrichtung oder der Anteil der rechtsschiefen Messspuren quer zur Messrichtung unter dem Grenzwert liegen, als nicht-porig angesehen werden.

## Claims

1. Method for evaluating the porosity of the surface of a flat steel product with a Zn-galvannealed protective coating, comprising the following steps:
- acquiring in each case a measurement value set of at least 10,000 measurement values for at least 400 parallel aligned measurement tracks in a square surface section of the Zn coating, wherein the surface section in question has an edge length of 1 mm;
- determining the mean and the median of the measurement values of each measurement value set in the measuring direction, whereby only those measurement tracks for which the mean is greater than the median are considered to be right-skewed;
- determining the mean and the median of the measurement values of each measurement value set transverse to the measuring direction, whereby only those measuring tracks transverse to the measuring direction for which the mean is greater than the median are considered to be right-skewed;
- determining the proportion of right-skewed measurement tracks on all measurement tracks in the measuring direction;
- determining the proportion of right-skewed measurement tracks on all measurement tracks transverse to the measuring direction;
- comparing the proportion of right-skewed measurement tracks in the measuring direction and the proportion of right-skewed measurement tracks transverse to the measuring direction with a limit value of at least 60%, wherein a surface of the Zn coating in which the proportions of the right-skewed measurement tracks both in the measuring direction and transverse thereto correspond at least to the limit value, is considered to be porous, whereas samples in which either the proportion of the right-skewed measurement tracks in the measuring direction or the proportion of the right-skewed measurement tracks transverse to the measuring direction are below the limit value, are considered to be non-porous.

## Revendications

1. Procédé d'évaluation de la porosité de la surface d'un produit plat en acier revêtu par traitement de recuit après galvanisation au Zn, comportant les étapes de travail suivantes :
- saisie à chaque fois d'un ensemble de valeurs de mesure d'au moins 10 000 valeurs de mesure pour au moins 400 traces de mesure parallèles par une section de surface carrée du revêtement en Zn, la section de surface considérée présentant une longueur d'arête de 1 mm ;
- détermination de la valeur moyenne et de la médiane des valeurs de mesure de chaque ensemble de valeurs de mesure dans la direction de mesure, les traces de mesure étant considérées comme inclinées à droite étant celles pour lesquelles la valeur moyenne est supérieure à leur médiane ;
- détermination de la valeur moyenne et de la médiane des valeurs de mesure de chaque ensemble de valeurs de mesure transversalement par rapport à la direction de mesure, les traces de mesure étant considérées comme inclinées à droite étant celles pour lesquelles la valeur moyenne est supérieure à leur médiane ;
- détermination de la proportion des valeurs de mesure inclinées à droite sur toutes les traces de mesure dans la direction de mesure ;
- détermination de la proportion des valeurs de mesure inclinées à droite sur toutes les traces de mesure transversalement par rapport à la direction de mesure ;
- comparaison de la proportion des valeurs de mesure inclinées à droite dans la direction de mesure et de la proportion des valeurs de mesure inclinées à droite transversalement par rapport à la direction de mesure avec une valeur limite d'au moins 60 %, une surface du revêtement en Zn, dans laquelle les proportions des traces de mesure inclinées à droite correspondent, dans la direction de mesure ainsi que transversalement par rapport à la direction de mesure, au moins à la valeur limite, étant jugée poreuse, tandis que des essais, dans lesquels soit la proportion des traces de mesure inclinées à droite dans la direction de mesure ou la proportion des valeurs de mesure inclinées à droite transversalement par rapport à la direction de mesure se situe en dessous de la valeur limite, sont considérés comme non-poreux.
